# EUROPÄISCHE PATENTANMELDUNG

(11) **EP 4 169 640 A1**
(43) Veröffentlichungstag der Anmeldung: **26.04.2023**
(21) Anmeldenummer: 21020523.3
(22) Anmeldetag: 22.10.2021
(51) Int. Cl.: B22F 10/12, B22F 12/00, B22F 12/30, B33Y 10/00, B33Y 30/00, B22F 12/80

(54) **VORRICHTUNG, MODULARES SYSTEM UND VERFAHREN ZUR STEREOLITHOGRAPHISCHEN ADDITIVEN FERTIGUNG**

(71) Anmelder: Incus GmbH, 1220 Wien (AT)
(72) Erfinder: Mitteramskogler, Gerald, A-1020 Wien (AT); Grubhofer, Manuel, A-1080 Wien (AT); Veigl, Christian, A-1110 Wien (AT)
(74) Vertreter: Keschmann, Marc

(57) **Zusammenfassung**

Bei einer Vorrichtung zur stereolithographischen additiven Fertigung von metallischen Bauteilen, umfassend
- einen Materialträger für eine Materialschicht eines zu polymerisierenden Materials, dessen Oberfläche eine Bauebene ausbildet,
- einen Materialbehälter für frisches Material, der über eine Materialausbringungsöffnung in die Bauebene mündet,
- eine Bauplattform, die zwischen einer mit der Bauebene bündigen Position und einer abgesenkten Position senkrecht zur Bauebene verfahrbar ist,
- eine zwischen dem Materialbehälter und der Bauplattform verfahrbare Rakel zum Auftragen der Materialschicht auf der Bauebene, und
- eine Belichtungseinheit zur ortsselektiven Belichtung der Materialschicht auf der Bauplattform oder einem auf der Bauplattform teilweise aufgebauten Bauteil,
ist der Materialträger auswechselbar in der Vorrichtung angeordnet.

## Beschreibung

Die Erfindung betrifft eine Vorrichtung zur stereolithographischen additiven Fertigung von metallischen Bauteilen, umfassend
- einen Materialträger für eine Materialschicht eines zu polymerisierenden Materials, dessen Oberfläche eine Bauebene ausbildet,
- einen Materialbehälter für frisches Material, der über eine Materialausbringungsöffnung in die Bauebene mündet,
- eine Bauplattform, die zwischen einer mit der Bauebene bündigen Position und einer abgesenkten Position senkrecht zur Bauebene verfahrbar ist,
- eine zwischen dem Materialbehälter und der Bauplattform verfahrbare Rakel zum Auftragen der Materialschicht auf der Bauebene, und
- eine Belichtungseinheit zur ortsselektiven Belichtung der Materialschicht auf der Bauplattform oder einem auf der Bauplattform teilweise aufgebauten Bauteil.

Die Erfindung betrifft weiters ein modulares System zur stereolithographischen additiven Fertigung von metallischen Bauteilen sowie ein Verfahren zur additiven Fertigung eines metallischen Bauteils unter Verwendung des modularen Systems.

Bei der stereolithographischen additiven Fertigung von metallischen Bauteilen wird das Bauteil durch schichtweises Polymerisieren eines metallgefüllten, photoploymerisierbaren Schlickers hergestellt, der so erhaltene Grünkörper von dem ihn umgebenden, nicht polymerisierten Material getrennt und dann in einem Ofen gebrannt, wodurch das organische polymerisierte Material abgebrannt wird. Es verbleibt ein metallischer Körper, der abschließend gesintert wird.

Jede Schicht des Bauteils wird auf einem Materialträger, der eine Bauebene definiert, durch die folgenden Verfahrensschritten erhalten: Der Materialträger umfasst eine Materialausbringungsöffnung, über welche eine Materialmenge aus einem Materialbehälter in die Bauebene gebracht wird. Danach wird die Materialmenge mit Hilfe einer Rakel aufgerakelt, um eine Materialschicht auf dem Materialträger zu bilden, die sich von der Materialausbringungsöffnung bis über die bündig mit der Bauebene angeordnete Bauplattform erstreckt. Im Bereich der Bauplattform wird die Materialschicht mit Hilfe einer Belichtungseinheit von oben ortsselektive belichtet, um eine ortsselektiv polymerisierte Bauteilschicht zu erhalten, wobei um die Bauteilschicht herum eine unpolymerisierte Materialmenge verbleibt. Danach wird die Bauplattform mit der Bauteilschicht und der sich auf der Bauplattform befindlichen unpolymerisierten Materialmenge abgesenkt, und zwar um einen Betrag, welcher der Schichtdicke der Bauteilschicht entspricht. Im abgesenkten Zustand ist die zuletzt hergestellte Bauteilschicht somit bündig zur Bauebene angeordnet. Für die Herstellung der nächsten Bauteilschicht werden die beschriebenen Schritte wiederholt, d.h. es wird eine neue Materialmenge in die Bauebene gebracht und mit Hilfe der Rakel aufgerakelt, wobei sich die neue Materialschicht im Bereich der Bauplattform über die zuvor erzeugte Bauteilschicht erstreckt. Nach Beendigung des Verfahrens wird ein Grünkörper erhalten, der aus einer Vielzahl von ortsselektiv polymerisierten Bauteilschichten aufgebaut wurde und der in unpolymerisiertem Material eingebettet ist. Das unpolymerisierte Material muss vom Bauteil abgelöst werden und kann nicht ohne weiteres wiederverwendet werden.

Bei den derzeitig angebotenen additiven Fertigungsmaschinen für metallische Werkstoffe ist die durch die Größe der Bauplattform (entsprechend der x- und der y-Richtung) definierte Bauraumgröße festgelegt und nicht variabel. Nur die Bauteilhöhe (entsprechend der z-Richtung) hat einen direkten Einfluss auf den Materialverbrauch, wobei die Grundfläche unverändert bleibt. Dadurch ergibt sich ein Mindestverbrauch des benötigten Ausgangsmaterials, der von der Erstreckung des Bauteils in x- und y-Richtung unabhängig ist und welcher nicht weiter reduziert werden kann.

Im Bereich der Materialentwicklung, vor allem für kostspielige Legierungen oder Edelmetalle führt dieser Umstand zu Mehrkosten. Es kann davon ausgegangen werden, dass mehrere Versuchsdurchläufe im Zuge der Entwicklung notwendig sind. Selbst bei genormten Prüfkörpern zur Überprüfung der Bauteilfestigkeit (Zugproben, etc.) muss die gesamte Grundfläche des Bauraums mit Material gefüllt werden.

Besitzt die Maschine beispielhaft einen Bauraum vom 20 x 20 x 20 cm (x, y, z), ergibt das für einen Prüfkörper mit 0,5 cm Dicke (in z-Richtung) ein Mindestmaterialverbrauch von 20 cm x 20 cm x 0,5 cm = 200 cm³, unabhängig von der Anzahl der Prüfkörper.

Zum Mindestmaterialverbrauch kommt hinzu, dass bei einigen additiven Fertigungsverfahren nur 50% des unpolymerisierten Materials wiederverwendet werden können.

Die Erfindung zielt daher darauf ab, den Verbrauch von unpolymerisiertem Material bei einem additiven Fertigungsverfahren zu verringern.

Zur Lösung dieser Aufgabe sieht die Erfindung bei einer Vorrichtung der eingangs genannten Art im Wesentlichen vor, dass der Materialträger auswechselbar in der Vorrichtung angeordnet ist.

Da der Materialträger einerseits die Materialzuführungsöffnung und andererseits eine Aussparung zur bündigen Aufnahme der Bauplattform aufweist, kann durch den Wechsel des Materialträgers eine Anpassung der Größe und/der Form der Materialzuführungsöffnung und eine Anpassung der Größe und/der Form der Bauplattform vorgenommen werden. Zu diesem Zweck können mehrere Materialträger vorrätig gehalten werden, welche unterschiedliche Ausbildungen der Materialzuführungsöffnung und der Aussparung für die Bauplattform aufweisen und es kann derjenige Materialträger in die Vorrichtung eingebaut werden, welcher bei einer bestimmten Bauteilgröße oder -form zu dem geringsten Materialverbrauch führt. Beispielsweise wird für einen Bauteil mit kleinen Abmessungen in der x- und y-Richtung ein Materialträger mit relativ zu anderen Materialträgern geringeren Abmessungen der Materialzuführungsöffnung und der Aussparung für die Bauplattform gewählt.

Der Materialträger kann bevorzugt als plattenartiges Bauteil ausgebildet sein, welches mit entsprechenden Halterungen an ein Gestell oder einen Träger der Vorrichtung lösbar befestigt werden kann. Die lösbare bzw. auswechselbare Befestigung des Materialträgers erfolgt vorzugsweise über eine Schraubverbindung, wodurch einerseits eine stabile Befestigung und andererseits eine genaue Positionierung sichergestellt ist, was für die Präzision des Fertigungsvorgangs vorteilhaft ist.

Durch die Wahl eines derart an die Form oder die Abmessungen des herzustellenden Bauteils angepassten Materialträgers, dass möglichst wenig unpolymerisiertes Material mit der jeweils hergestellten Bauteilschicht auf der Bauplattform abgesenkt wird, kann die Menge an unverbrauchtem, d.h. nicht polymerisierten Materials, das aus dem Prozessbereich abgeführt wird, minimiert werden.

Durch die Wahl eines Materialträgers, bei dem die Materialzuführungsöffnung die x- und y-Erstreckung des herzustellenden Bauteils möglichst wenig übersteigt, wird auch die Menge des frisch zugeführten Materials minimiert.

Eine weitere Optimierung kann hinsichtlich der Materialzuführung bevorzugt dadurch erfolgen, dass nicht nur die Materialzuführungsöffnung durch den Wechsel des Materialträgers an das jeweilige Bauteil anpassbar ist, sondern auch der Materialbehälter. Eine bevorzugte Weiterbildung sieht in diesem Zusammenhang vor, dass der Materialbehälter unterhalb der Materialausbringungsöffnung am Materialträger angeordnet und gemeinsam mit dem Materialträger auswechselbar ist.

Bevorzugt weist der Materialbehälter eine zylindrische Behälterwand und einen als verschiebbaren Kolben ausgebildeten Behälterboden auf, mit dem vorzugsweise eine antreibbare Heb- und Senkvorrichtung zum Anheben und Absenken des Behälterbodens zusammenwirkt. Der verschiebbare Behälterboden dient hierbei dem Ausbringen von Material über die Materialzuführungsöffnung in die Bauebene. Dadurch, dass die Behälterwand am Materialträger angebracht und daher gemeinsam mit diesem auswechselbar ist, gelingt eine einfache Anpassung an die Bauteilform. Beispielsweise kann die Behälterwand je nach Kontur des Bauteils kreiszylindrisch oder als Zylinder mit mehreckigem Querschnitt, d.h. prismatisch, ausgebildet sein. Der verschiebbare Behälterboden ist hierbei nicht Teil des Materialträgers, kann aber bei einer bevorzugten Ausbildung der erfindungsgenmäßen Vorrichtung gesondert austauschbar sein. Insbesondere kann vorgesehen sein, dass die Heb- und Senkvorrichtung einen anheb- und absenkbareb Stab aufweist, an welchem der Behälterboden austauschbar befestigt ist.

Die Anpassung des Materialträgers an verschiedene Bauplattformgrößen oder -formen kann gemäß einer bevorzugten Ausbildung derart erfolgen, dass der auswechselbare Materialträger eine der Form der Bauplattform entsprechende Aussparung aufweist, unterhalb der ein Behälter für verbrauchtes Material am Materialträger angeordnet ist, der gemeinsam mit dem Materialträger auswechselbar ist und dessen Behälterboden von der verfahrbaren Bauplattform gebildet ist.

Die Bauplattform kann wie der verschiebbare Boden des Materialbehälters unabhängig vom Materialträger austauschbar sein. Bevorzugt ist in diesem Zusammenhang vorgesehen, dass mit der Bauplattform eine antreibbare Heb- und Senkvorrichtung zum Anheben und Absenken der Bauplattform zusammenwirkt, die vorzugsweise einen anheb- und absenkbaren Stab aufweist, an welchem die Bauplattform austauschbar befestigt ist.

Schließlich kann auch die Rakel an die Größe und/oder Form des herzustellenden Bauteils angepasst werden, um den Materialverbrauch zu reduzieren. Zu diesem Zweck sieht eine bevorzugte Weiterbildung vor, dass die Vorrichtung eine zu einer Hin- und Herbewegung parallel zur Bauebene antreibbare Halteeinheit aufweist, an der die Rakel austauschbar befestigt ist.

Gemäß einem zweiten Aspekt betrifft die Erfindung ein modulares System zur stereolithographischen additiven Fertigung von metallischen Bauteilen, umfassend die oben beschriebene Fertigungsvorrichtung, die mit einem ersten Set und wenigstens einem weiteren Set von Bauelementen ausgestattet ist, wobei das erste Set und das wenigstens eine weitere Set jeweils einen Materialträger, eine Bauplattform und ggf. eine Rakel umfasst, wobei wahlweise das erste Set oder das wenigstens eine weitere Set einbaubar ist und wobei die Bauplattform des ersten Sets und die Bauplattform des wenigstens einen weiteren Sets voneinander verschiedene Formen und/oder Abmessungen aufweisen und die Aussparung des zugehörigen Materialträgers an die Form bzw. Abmessungen der jeweiligen Bauplattform angepasst ist.

Bevorzugt weisen die Materialausbringungsöffnung des Materialträger des ersten Sets und die Materialausbringungsöffnung des Materialträgers des wenigstens einen weiteren Sets voneinander verschiedene Formen und/oder Abmessungen auf.

Bevorzugt weisen die Rakel des ersten Sets und die Rakel des wenigstens einen weiteren Sets voneinander verschiedene Abmessungen auf.

Gemäß einem dritten Aspekt betrifft die Erfindung ein Verfahren zur additiven Fertigung eines metallischen Bauteils unter Verwendung eines modularen Systems gemäß dem zweiten Aspekt der Erfindung, umfassend die Schritte:
a) Ausbringen einer Materialmenge aus dem Materialbehälter über die Materialausbringungsöffnung in die Bauebene,
b) Aufrakeln der Materialmenge mit Hilfe der Rakel, um eine Materialschicht auf dem Materialträger zu bilden, die sich von der Materialausbringungsöffnung bis über die Bauplattform erstreckt,
c) ortsselektives Belichten der Materialschicht mit Hilfe der Belichtungseinheit, um eine ortsselektiv polymerisierte Bauteilschicht zu erhalten, wobei die Bauteilschicht umgebend eine unpolymerisierte Materialmenge verbleibt, und
d) Absenken der Bauplattform mit der Bauteilschicht und der unpolymerisierten Materialmenge,

wobei die Schritte a) bis d) wiederholt werden, um das Bauteil aus einer Vielzahl von ortsselektiv polymerisierten Bauteilschichten aufzubauen,
wobei vor dem Herstellen der Bauteilschichten aus dem ersten Set und dem wenigstens einen zweiten Set dasjenige gewählt und in die Vorrichtung eingebaut wird, bei der die mit der Bauplattform abzusenkende unpolymerisierte Materialmenge unter Berücksichtigung der Abmessungen des aufzubauenden Bauteils geringer ist.

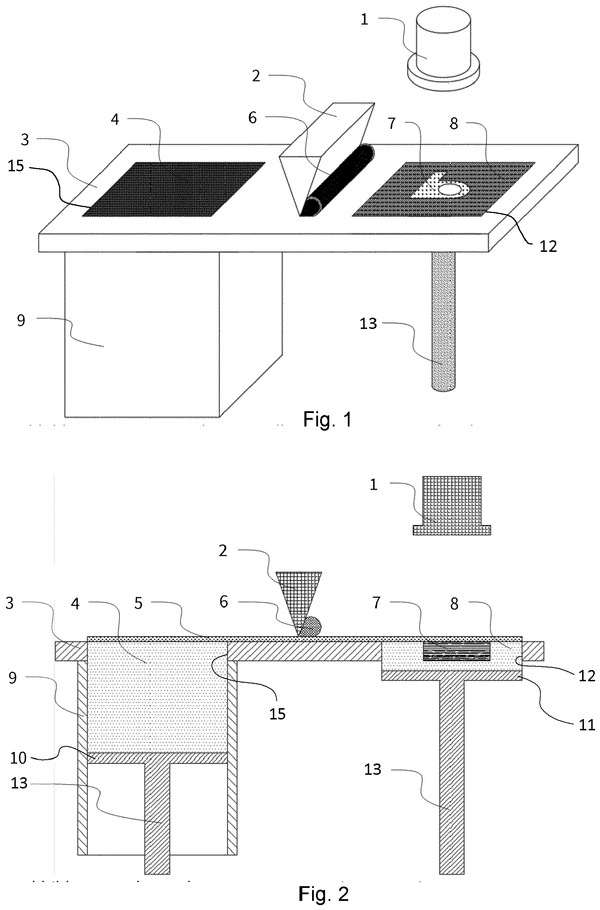

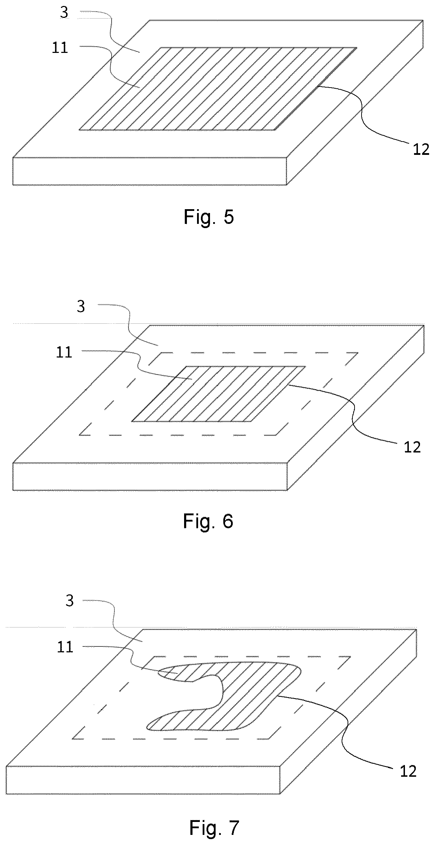

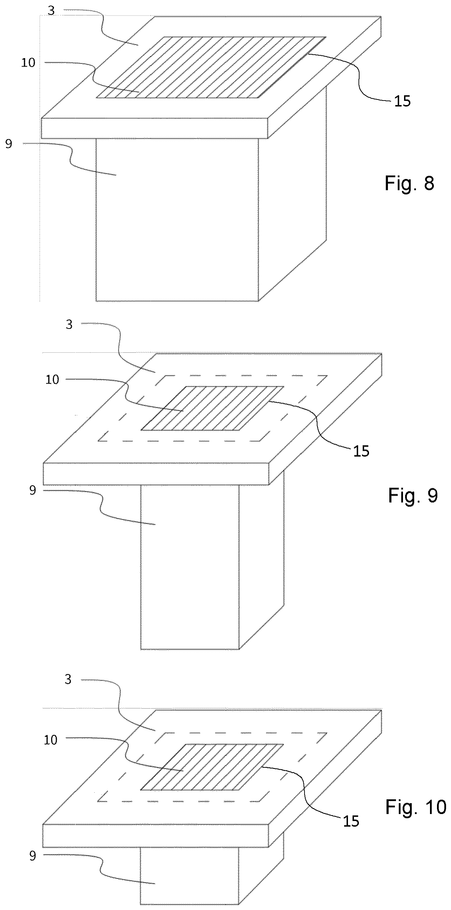

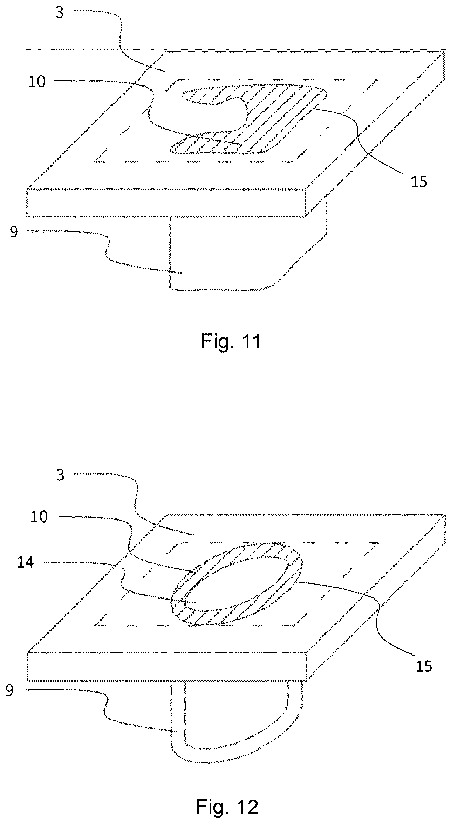

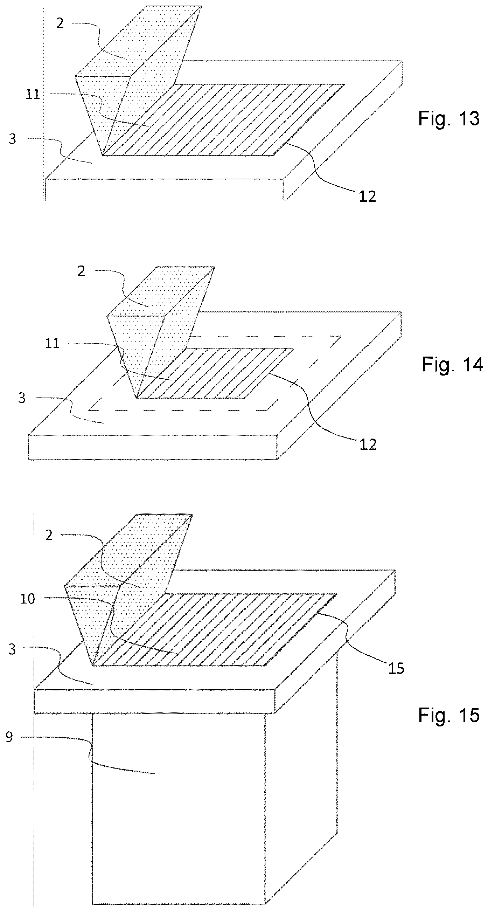

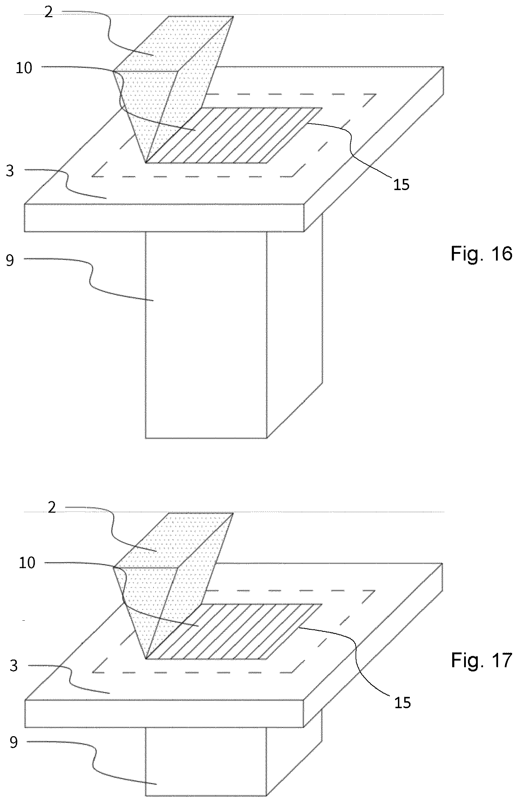

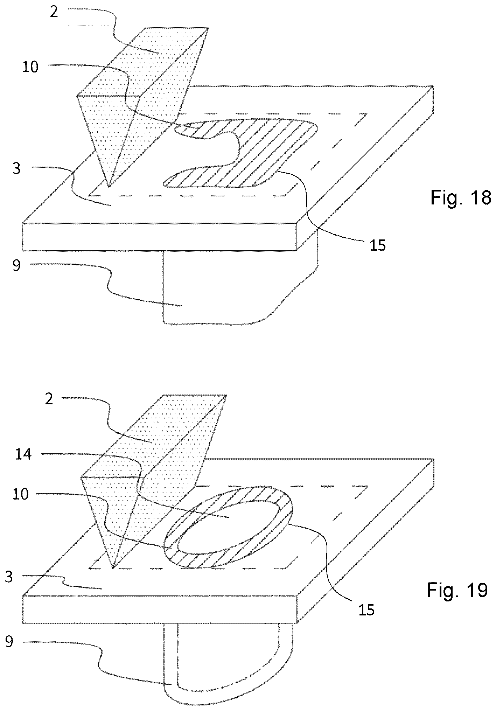

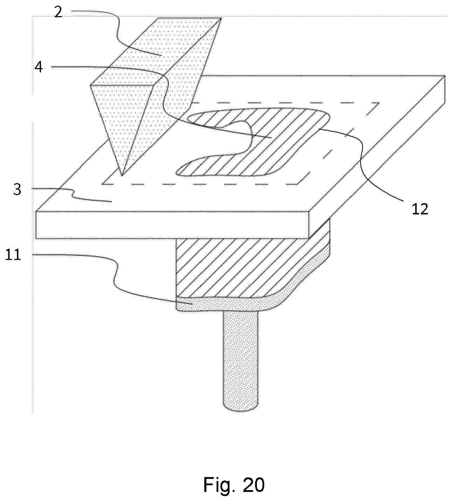

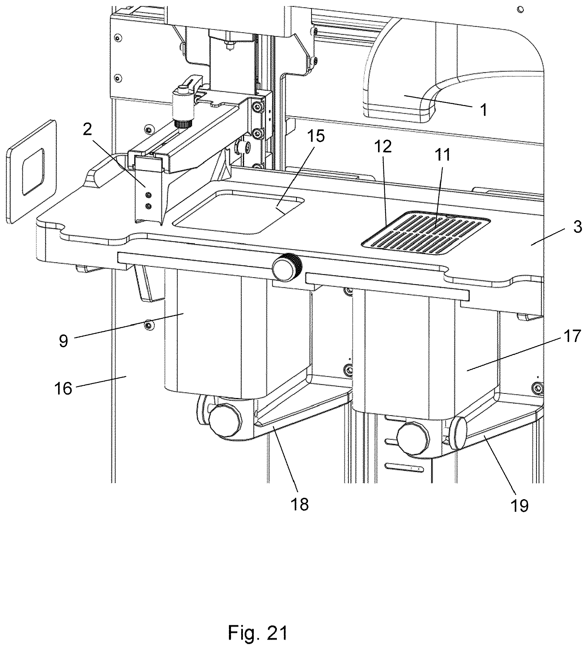

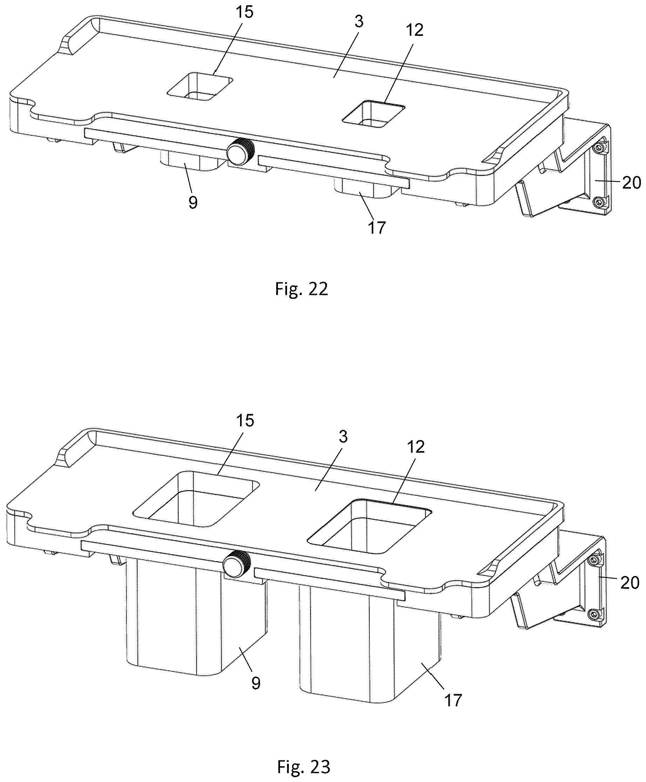

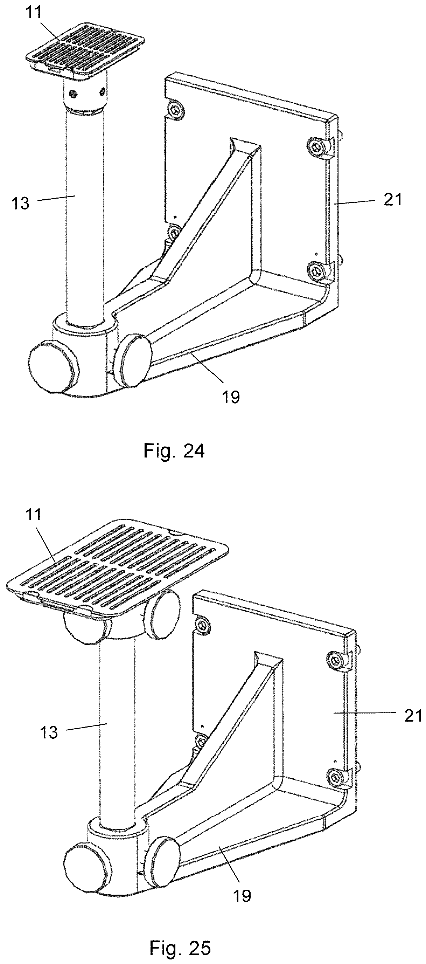

Die Erfindung wird nachfolgend anhand von in der Zeichnung schematisch dargestellten Ausführungsbeispielen näher erläutert. In dieser zeigen Fig. 1 eine isometrische Ansicht der erfindungsgemäßen Vorrichtung, Fig. 2-4 den Aufbau einer Bauteilschicht in mehreren Schritten, Fig. 5 einen Ausschnitt der Vorrichtung mit der Bauplattform in einer ersten Ausführung, Fig. 6 die Vorrichtung gemäß Fig. 5 in einer zweiten Ausführung, Fig. 7 die Vorrichtung gemäß Fig. 5 in einer dritten Ausführung, Fig. 8 einen Ausschnitt der Vorrichtung mit der Materialplattform und dem Materialbehälter in einer ersten Ausführung, Fig. 9 die Vorrichtung gemäß Fig. 8 in einer zweiten Ausführung, Fig. 10 die Vorrichtung gemäß Fig. 8 in einer dritten Ausführung, Fig. 11 die Vorrichtung gemäß Fig. 8 in einer vierten Ausführung, Fig. 12 die Vorrichtung gemäß Fig. 8 in einer fünften Ausführung, Fig. 13 einen Ausschnitt der Vorrichtung mit der Bauplattform und der Rakel in einer ersten Ausführung, Fig. 14 die Vorrichtung gemäß Fig. 13 in einer zweiten Ausführung, Fig. 15 einen Ausschnitt der Vorrichtung mit der Rakel, der Materialplattform und dem Materialbehälter in einer ersten Ausführung, Fig. 16 die Vorrichtung gemäß Fig. 15 in einer zweiten Ausführung, Fig. 17 die Vorrichtung gemäß Fig. 15 in einer dritten Ausführung, Fig. 18 die Vorrichtung gemäß Fig. 15 in einer vierten Ausführung, Fig. 19 die Vorrichtung gemäß Fig. 15 in einer fünften Ausführung, Fig. 20 einen Ausschnitt der Vorrichtung mit der Rakel und der Bauplattform in einer abgewandelten Ausführung, Fig. 21 eine weitere Ausbildung der erfindungsgemäßen Vorrichtung, Fig. 22 eine Darstellung einer ersten Ausbildung des Materialträgers der Vorrichtung von Fig. 21, Fig. 23 eine Darstellung einer zweiten Ausbildung des Materialträgers der Vorrichtung von Fig. 21. Fig. 24 eine erste Ausbildung einer Bauplattform mit Hebe- und Senkvorrichtung für die Vorrichtung gemäß Fig. 21 und Fig. 25 eine zweite Ausbildung der Bauplattform mit Hebe- und Senkvorrichtung für die Vorrichtung gemäß Fig. 21.

Fig. 1 zeigt eine erfindungsgemäße Vorrichtung zum additiven Fertigen von metallischen Bauteilen. Die Vorrichtung umfasst einen plattenartigen Materialträger 3, dessen Oberfläche eine Bauebene ausbildet. In einem in der Zeichnung links dargestellten Bereich weist der Materialträger 3 eine Materialzuführungsöffnung 15 auf, über welche Material 4 aus einem Materialbehälter 9 in die Bauebene gebracht werden kann. Im in der Zeichnung rechts dargestellten Bereich weist der Materialträger 3 eine Aussparung 12 auf, in welcher eine Bauplattform 11 aufgenommen ist, die mittels einer Stange 13 und einer nicht dargestellten Hebe- und Senkvorrichtung anhebbar und absenkbar gelagert ist. Oberhalb der Bauplattform 11 ist eine Belichtungseinheit 1 zur ortsselektiven Belichtung einer Materialschicht angeordnet.

Die Belichtungseinheit 1 kann beispielswiese als DLP-Projektor ausgebildet sein. Um das aus dem Materialbehälter 11 in die Bauebene gebrachte Material 4 aufzuschichten, ist eine Rakel 2 vorgesehen, die bei einer Bewegung vom Materialbehälter 9 zur Bauplattform 11 eine Materialwalze 6 vor sich herschiebt.

Der Aufbau eines Bauteils 7 erfolgt schichtweise, wobei für jede Schicht mehrere Schritte vorgenommen werden. Zuerst (Fig. 2) wird durch das Anheben des Behälterbodens 10 (im Folgenden auch Materialplattform genannt) des Materialbehälters 9 Material 4 über die Materialzuführungsöffnung 15 in die Bauebene gebracht. Dieses Material wird mit der Rakel 2 in Richtung zur Bauplattform 11 befördert. Dazu wird das Material in einer Materialwalze 6 über die Oberfläche des Materialträgers 3 gestrichen und bildet eine dünne Materialschicht 5 aus, die sich über die Bauplattform 11 erstreckt.

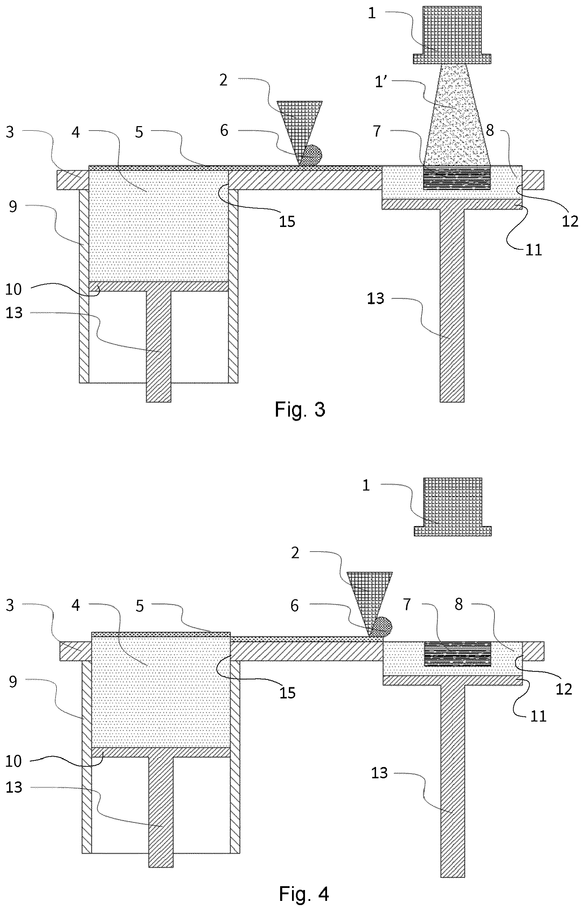

Danach erfolgt eine Belichtung 1' der Materialschicht 5 mittels der Belichtungseinheit 1, welche die lokale Aushärtung des Materials auf der Bauplattform 11 zur Folge hat (Fig. 3).

Nach der Belichtung wird die Bauplattform 11 gemeinsam mit der sich ausgebildeten Bauteilschicht und dem dieses umgebenden unpolymerisierten Material 8 um eine definierte Höhe abgesenkt (Fig. 4). Weiters wird die Materialplattform 10 angehoben, um neues Material 4 für den nächsten Beschichtungsschritt bereitzustellen.

Die beschriebenen Schritte werden so lange wiederholt, bis die Bauteile, sogenannte Grünteile, schichtweise hergestellt wurden. Die Grünteile sind nach der Herstellung im Materialblock 8 eingebettet und können durch das Abschmelzen des nicht ausgehärteten Materials freigelegt und gereinigt werden. Abschließend werden die Grünteile entbindert und gesintert, um die finalen Bauteileigenschaften zu erhalten.

Gemäß der Erfindung sind einige der für den Prozess notwendigen Komponenten der Vorrichtung auswechselbar und in ihrer Geometrie veränderbar, um die Menge des aus dem Materialbehälter 9 ausgebrachten Materials 4 und/oder die Menge des mit der Bauplattform 11 abgesenkten unpolymerisierten Materials 8 zu minimieren. Zu den auswechselbaren bzw. anpassbaren Komponenten der Vorrichtung gehören die Rakel 2, der Materialträger 3, der Materialbehälter 9, die Materialplattform 10 sowie die Bauplattform 11. Die genannten Bauteile können in ihren Abmessungen an den Anwendungsfall angepasst werden.

Die Bau- und Materialplattformen 10 und 11 können sowohl in ihren x- und y- Abmessungen angepasst als auch mit einer Freiform versehen werden. Die dazugehörigen Ausschnitte in dem Materialträger 3 werden an die Form der Bau- und Materialplattform 10 bzw. 11 angepasst.

Fig. 5 zeigt einen Ausschnitt des Materialträgers 3 mit der Aussparung 12 und der in der Aussparung 12 aufgenommenen Bauplattform 11 in der Größe gemäß den Fig. 1-4. Fig. 6 zeigt eine Ausführung des Materialträgers 3 mit angepasster, d.h. verringerter, Größe der Bauplattform 11 sowie der Aussparung 12 im Vergleich zur ursprünglichen Größe (strichlierte Linie). Fig. 7 zeigt eine Ausführung des Materialträgers 3 mit angepasster Bauplattform 11, bei der die Aussparung 12 bzw. die Bauplattform 11 einer Freiform entsprechend ausgestaltet ist. Zum Vergleich ist die ursprüngliche Größe wieder mit strichlierter Linie dargestellt.

Die Fig. 8 bis 11 zeigen die Anpassung der Materialplattform 10 sowie des Materialbehälters 9. Fig. 8 zeigt einen Ausschnitt des Materialträgers 3 mit der Materialzuführungsöffnung 15 und der entsprechenden Materialplattform 10 in der Größe gemäß den Fig. 1-4. Fig. 9 zeigt eine Ausführung des Materialträgers 3 mit angepasster, d.h. verringerter, Größe der Materialzuführungsöffnung 15 sowie des Materialbehälters 9, wobei im Vergleich zur ursprünglichen Größe (strichlierte Linie) die Größe in x- und y-Richtung angepasst wurde. Bei der Ausführung gemäß Fig. 10 wurde zusätzlich auch die Größe des Materialbehälters 9 in z-Richtung angepasst. Fig. 11 zeigt eine Ausführung des Materialträgers 3, bei der die Materialzuführungsöffnung 15 sowie der Materialbehälter 9 einer Freiform entsprechend ausgestaltet sind. Zum Vergleich ist die ursprüngliche Größe wieder mit strichlierter Linie dargestellt.

Als weitere Modifikation ist es ebenfalls möglich, die Materialplattform 10 mit einem innenliegenden Stempel 14 zu versehen (Fig. 12). Dadurch kann ein "Hohlraum" erzeugt werden, in welchem kein Material verwendet wird. ein Anwendungsfall hierfür ist zum Beispiel die Herstellung von ringförmigen Bauteilen.

Die Fig. 13 bis 17 zeigen die Anpassung der Rakel 2 an die Größe der Materialplattform 10 bzw. der Bauplattform 11. Fig. 13 zeigt einen Ausschnitt des Materialträgers 3 mit der Bauplattform 11 in der Größe gemäß den Fig. 1-4. Bei der Ausführung gemäß Fig. 14 ist die Rakel 2 an die Abmessung der verkleinerten Bauplattform 11 in y-Richtung angepasst. Fig. 15 zeigt einen Ausschnitt des Materialträgers 3 mit der Materialplattform 10 und dem Materialbehälter 9 in der ursprünglichen Größe. Bei der Ausführung gemäß Fig. 16 ist die Rakel 2 in y-Richtung an die verringerte Größe der Materialplattform 10 und des Materialbehälters 9 angepasst. Die Höhe des Materialbehälters 9 in z-Richtung ist bei dieser Ausführung unverändert. Bei der Ausbildung gemäß Fig. 17 hingegen wurde auch die Höhe des Materialbehälters 9 verringert.

Fig. 18 zeigt eine angepasst Baugruppe, bei der die Materialplattform 10 und der Materialbehälter 9 wie in Fig. 11 mit einer Freiform ausgeführt sind und die Rakel 2 in y-Richtung an die Größe der Freiform angepasst ist. Fig. 19 zeigt eine angepasst Baugruppe, bei der die Materialplattform 10 und der Materialbehälter 9 wie in Fig. 12 ringförmig ausgeführt sind und die Rakel 2 in y-Richtung an die Größe der Ringform angepasst ist.

Auf Grund der Viskosität des Materials, welches bei Raumtemperatur butter- oder tonartig ist, ist es nicht notwendig bei der Bauplattform 11 einen Materialbehälter zu verwenden. Dieser Behälter kann jedoch bei Bedarf nachgerüstet werden. Eine Ausführung ohne Behälter ist in Fig. 20 dargestellt.

Anhand des Ausführungsbeispiels gemäß den Fig. 21-25 wird nun eine konstruktive Ausbildung der auswechselbaren Anordnung des Materialträgers 2, der Materialplattform 10 und der Bauplattform 11 gezeigt. In Fig. 21 ist ersichtlich, dass der Materialträger 3 an einem vertikalen 16 Träger auswechselbar angebracht ist. Weiters ist der Materialbehälter 9 für frisches Material samt einer Heb- und Senkvorrichtung 18 für das Anheben und Absenken der innerhalb des Materialbehälters 9 verschiebbaren Materialplattform 10 dargestellt. Für die Aufnahme des mit dem hergestellten Bauteil abgesenkten verbrauchten Materials ist unterhalb der Aussparung 12 ein Materialbehälter 17 vorgesehen. Für das Absenken und das Anheben der Bauplattform 11 ist eine Heb- und Senkvorrichtung 19 vorgesehen, welche die innerhalb des Materialbehälters 17 verschiebbare Bauplattform 11 trägt.

In Fig. 22 und 23 ist der auswechselbare Materialträger 3 in zwei verschiedenen Ausführungen dargestellt, die sich in der Größe der Materialzuführungsöffnung 15, der Aussparung 12 und der Materialbehälter 9 und 17 unterscheiden. Weiters ist ersichtlich, dass der Materialträger 3 mit Befestigungsflanschen 20 zur auswechselbaren Befestigung am Träger 16 ausgestattet ist.

In Fig. 24 und 25 ist die Heb- und Senkvorrichtung 19 mit daran angebrachter Bauplattform 11 in zwei verschiedenen Ausführungen dargestellt, die sich in der Größe der Bauplattform 11 unterscheiden. Die Heb- und Senkvorrichtung 19 umfasst einen Befestigungsflanschen 21 zur auswechselbaren Befestigung am Träger 16.

## Patentansprüche

1. Vorrichtung zur stereolithographischen additiven Fertigung von metallischen Bauteilen, umfassend
- einen Materialträger für eine Materialschicht eines zu polymerisierenden Materials, dessen Oberfläche eine Bauebene ausbildet,
- einen Materialbehälter für frisches Material, der über eine Materialausbringungsöffnung in die Bauebene mündet,
- eine Bauplattform, die zwischen einer mit der Bauebene bündigen Position und einer abgesenkten Position senkrecht zur Bauebene verfahrbar ist,
- eine zwischen dem Materialbehälter und der Bauplattform verfahrbare Rakel zum Auftragen der Materialschicht auf der Bauebene, und
- eine Belichtungseinheit zur ortsselektiven Belichtung der Materialschicht auf der Bauplattform oder einem auf der Bauplattform teilweise aufgebauten Bauteil,
wobei der Materialträger auswechselbar in der Vorrichtung angeordnet ist.

2. Vorrichtung nach Anspruch 1, **dadurch gekennzeichnet, dass** der Materialbehälter unterhalb der Materialausbringungsöffnung am Materialträger angeordnet und gemeinsam mit dem Materialträger auswechselbar ist.

3. Vorrichtung nach Anspruch 2, **dadurch gekennzeichnet, dass** der Materialbehälter eine zylindrische Behälterwand und einen als verschiebbaren Kolben ausgebildeten Behälterboden aufweist, mit dem vorzugsweise eine antreibbare Heb- und Senkvorrichtung zum Anheben und Absenken des Behälterbodens zusammenwirkt.

4. Vorrichtung nach Anspruch 3, **dadurch gekennzeichnet, dass** die Heb- und Senkvorrichtung einen anheb- und absenkbareb Stab aufweist, an welchem der Behälterboden austauschbar befestigt ist.

5. Vorrichtung nach einem der Ansprüche 1 bis 4, **dadurch gekennzeichnet, dass** der auswechselbare Materialträger eine der Form der Bauplattform entsprechende Aussparung aufweist, unterhalb der ein Behälter für verbrauchtes Material am Materialträger angeordnet ist, der gemeinsam mit dem Materialträger auswechselbar ist und dessen Behälterboden von der verfahrbaren Bauplattform gebildet ist.

6. Vorrichtung nach einem der Ansprüche 1 bis 5, **dadurch gekennzeichnet, dass** mit der Bauplattform eine antreibbare Heb- und Senkvorrichtung zum Anheben und Absenken der Bauplattform zusammenwirkt, die vorzugsweise einen anheb- und absenkbaren Stab aufweist, an welchem die Bauplattform austauschbar befestigt ist.

7. Vorrichtung nach einem der Ansprüche 1, **dadurch gekennzeichnet**, umfassend eine zu einer Hin- und Herbewegung parallel zur Bauebene antreibbare Halteeinheit, an der die Rakel austauschbar befestigt ist.

8. Modulares System zur stereolithographischen additiven Fertigung von metallischen Bauteilen, umfassend eine Vorrichtung nach einem der Ansprüche 1 bis 7 mit einem ersten Set und wenigstens einem weiteren Set, wobei das erste Set und das wenigstens eine weitere Set jeweils einen Materialträger, eine Bauplattform und ggf. eine Rakel umfasst, wobei wahlweise das erste Set oder das wenigstens eine weitere Set einbaubar ist und wobei die Bauplattform des ersten Sets und die Bauplattform des wenigstens einen weiteren Sets voneinander verschiedene Formen und/oder Abmessungen aufweisen und die Aussparung des zugehörigen Materialträgers an die Form bzw. Abmessungen der jeweiligen Bauplattform angepasst ist.

9. Modulares System nach Anspruch 8, **dadurch gekennzeichnet, dass** die Materialausbringungsöffnung des Materialträger des ersten Sets und die Materialausbringungsöffnung des Materialträgers des wenigstens einen weiteren Sets voneinander verschiedene Formen und/oder Abmessungen aufweisen.

10. Modulares System nach Anspruch 8 oder 9, **dadurch gekennzeichnet, dass** die Rakel des ersten Sets und die Rakel des wenigstens einen weiteren Sets voneinander verschiedene Abmessungen aufweisen.

11. Verfahren zur additiven Fertigung eines metallischen Bauteils unter Verwendung eines modularen Systems nach einem der Ansprüche 8 bis 10, umfassend die Schritte:
a) Ausbringen einer Materialmenge aus dem Materialbehälter über die Materialausbringungsöffnung in die Bauebene,
b) Aufrakeln der Materialmenge mit Hilfe der Rakel, um eine Materialschicht auf dem Materialträger zu bilden, die sich von der Materialausbringungsöffnung bis über die Bauplattform erstreckt,
c) ortsselektives Belichten der Materialschicht mit Hilfe der Belichtungseinheit, um eine ortsselektiv polymerisierte Bauteilschicht zu erhalten, wobei die Bauteilschicht umgebend eine unpolymerisierte Materialmenge verbleibt, und
d) Absenken der Bauplattform mit der Bauteilschicht und der unpolymerisierten Materialmenge,
wobei die Schritte a) bis d) wiederholt werden, um das Bauteil aus einer Vielzahl von ortsselektiv polymerisierten Bauteilschichten aufzubauen,
**dadurch gekennzeichnet, dass** vor dem Herstellen der Bauteilschichten aus dem ersten Set und dem wenigstens einen zweiten Set dasjenige gewählt und in die Vorrichtung eingebaut wird, bei der die mit der Bauplattform abzusenkende unpolymerisierte Materialmenge unter Berücksichtigung der Abmessungen des aufzubauenden Bauteils geringer ist.
